# DEMANDE DE BREVET EUROPEEN

(11) **EP 2 799 815 A1**
(43) Date de publication de la demande: **05.11.2014**
(21) Numéro de dépôt: 14160020.5
(22) Date de dépôt: 14.03.2014
(51) Int. Cl.: G01C 19/66, H01S 3/083

(54) **Gyrolaser à amorçage optimisé**

(30) Priorité: 19.04.2013 FR 1300927
(71) Demandeur: Thales, 92200 Neuilly Sur Seine (FR)
(72) Inventeur: David, Selvin, 86100 Chatellerault (FR); Chazalmartin, Olivier, 86130 St Georges Les Baillargeaux (FR); Mary, Alexandre, 86100 Chatellerault (FR)
(74) Mandataire: Joubert, Cécile

(57) **Abrégé**

L'invention concerne un gyrolaser (30) comprenant :
-une cavité optique en anneau et un milieu gazeux (102), au moins trois électrodes en contact avec le gaz du milieu amplificateur, lesdites électrodes étant aptes à générer des charges lorsqu'une tension électrique d'amorçage est appliquée,
- ladite cavité et une répartition desdites électrodes comprenant au moins un plan de symétrie (xz) perpendiculaire au plan de la cavité et passant par ladite électrode du premier type (E),

- au moins un élément électriquement conducteur d'amorçage (CE'1, CE'2) mis à un potentiel prédéterminé, et dont la forme et la disposition sont telles que ladite symétrie est respectée,
-ledit élément électriquement conducteur étant adapté pour générer localement un champ électrique apte à guider lesdites charges de sorte qu'elles se répartissent symétriquement selon un premier flux (F1) et un deuxième flux (F2) dans respectivement lesdites première (Z1) et deuxième (Z2) zones de décharges lors de l'application de ladite tension d'amorçage, de manière à initialiser simultanément un premier plasma (P1) et un deuxième plasma (P2) respectivement dans ladite première zone de décharge (Z1) et dans ladite deuxième zone de décharge (Z2).

## Description

### DOMAINE DE L'INVENTION

La présente invention concerne le domaine des gyromètres utilisant l'effet laser dit gyrolasers, utilisés notamment dans les centrales inertielles nécessaires à la navigation de certains types de véhicules comme les aéronefs.

### ETAT DE LA TECHNIQUE

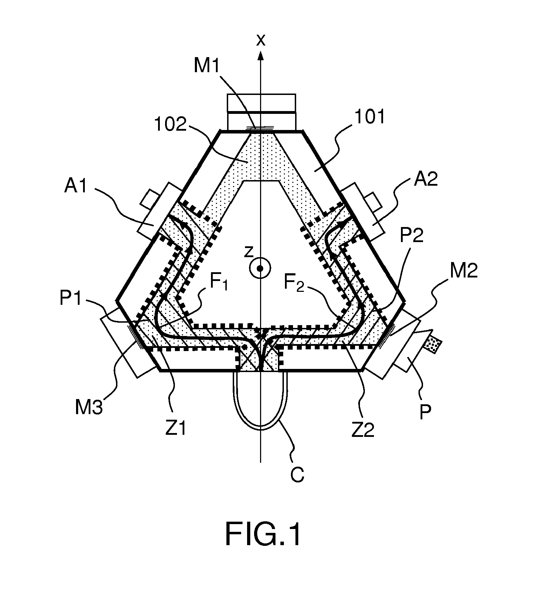

Un gyrolaser connu, tel qu'illustré figure 1, est un laser en anneau bidirectionnel qui permet de mesurer une vitesse angulaire (ou une position angulaire relative par intégration dans le temps). II est constitué d'une cavité optique résonnante, typiquement triangulaire (figure 1) ou carrée, dont les sommets sont matérialisés par des miroirs (M1, M2 et M3 sur la figure 1), rassemblés sur un bloc 101 dans lequel des chemins sont percés pour fournir la cavité optique. Afin de minimiser sa dilatation thermique, le bloc 101 est en matériau vitrocéramique, typiquement en Zerodur (marque déposée). Un milieu gazeux 102 est présent dans le chemin optique de la cavité et au moins une portion de celui-ci constitue le milieu amplificateur dans lequel s'opère l'inversion de population. Un système d'excitation fournit au gyrolaser de l'énergie permettant de générer le gain laser. Les éléments qui composent la cavité laser sont choisis de manière à permettre un fonctionnement bidirectionnel : la cavité laser doit pouvoir soutenir simultanément deux ondes qui se propagent en sens opposés (ondes dites contrarotatives).

Le principe de fonctionnement d'un gyrolaser est fondé sur l'effet Sagnac dans une cavité laser en anneau animée d'un mouvement de rotation. Lorsque la cavité est immobile, les deux ondes contrarotatives présentent la même fréquence optique. En présence d'un mouvement de rotation dans le plan de la cavité optique, l'effet Sagnac induit une différence de fréquence entre les deux ondes optiques contrarotatives. Une fraction de l'énergie de chaque onde est extraite de la cavité par un miroir partiellement transmissif M2. Un dispositif de recombinaison, par exemple un prisme P, fait interférer les deux faisceaux extraits pour former des franges d'interférences qui sont observées à l'aide d'un ou plusieurs photo-détecteurs. La fréquence des franges devant le photo-détecteur est proportionnel à la vitesse de rotation imprimée à la cavité et leur sens de défilement dépend du sens de rotation.
La figure 1 illustre un gyrolaser monoaxe triangulaire, sensible sur un seul axe de rotation, qui utilise un milieu amplificateur constitué d'une portion du milieu gazeux 102, qui est habituellement un mélange d'hélium et de néon. L'établissement d'une inversion de population dans le milieu amplificateur est obtenu en générant un plasma (milieu amplificateur).
Ce plasma est obtenu en appliquant une tension électrique entre deux électrodes, une anode et une cathode, mécaniquement solidaires de la cavité et plongées dans le gaz. L'application d'une haute tension électrique, entre les deux électrodes, dénommée tension d'amorçage, typiquement une impulsion quelques kilo Volts pendant une durée de 1 µs à quelques ms, ionise la portion de milieu gazeux situé entre ces électrode dénommée zone de décharge, et la rend conductrice (décharge électrique), générant le plasma gazeux. Puis l'application d'une tension plus basse (typiquement quelques centaines de volts) établit un courant. Les électrons qui circulent cèdent leur énergie cinétique aux atomes du milieu gazeux et provoquent l'inversion de population recherchée.
S'il n'y a que deux électrodes et un seul milieu amplificateur entre celles-ci, avec un flux de d'électrons unique de la cathode vers l'anode, une onde optique se propage dans le même sens que les électrons tandis que l'autre onde se propage en sens contraire. Ces ondes optiques se propageant dans la cavité interagissent avec les charges électriques du plasma gazeux, et cette dissymétrie d'interaction est à l'origine de l'existence d'un « faux zéro » du gyrolaser trop important.
Une solution est de symétriser l'écoulement du fluide d'électron par rapport aux ondes contrarotatives. Pour cela le gyrolaser comprend une électrode d'un premier type (anode ou cathode) et au moins deux électrodes d'un deuxième type (cathode ou anode). Sur la figure 1, le gyrolaser comprend une électrode de type cathode C et deux électrodes de type anode A1 et A2. En appliquant simultanément une tension d'amorçage entre C et A1, définissant une première zone de décharge Z1, et entre C et A2 définissant une deuxième zone de décharge Z2, deux flux de charges ionisées (électrons sur la figure 1) F1 et F2 sont générés respectivement dans la première zone Z1 et la deuxième zone Z2, permettant l'établissement de deux plasmas P1 et P2, respectivement dans la première zone Z1 et la deuxième zone Z2. Les plasmas P1 et P2 sont schématisées sur la figure 1 par des hachures. La somme totale des écoulements traversés par chaque onde optique est alors identique. De plus, pour assurer le fonctionnement du gyrolaser, il est nécessaire que la cavité optique ainsi que la répartition des électrodes C, A1 et A2 comprennent un plan de symétrie xz, l'axe x étant situé dans le plan de la cavité et passant par la cathode unique, l'axe z étant perpendiculaire au plan de la cavité. La symétrie des décharges permet de compenser les effets Fizeau sur les deux faisceaux contrapropagatifs.

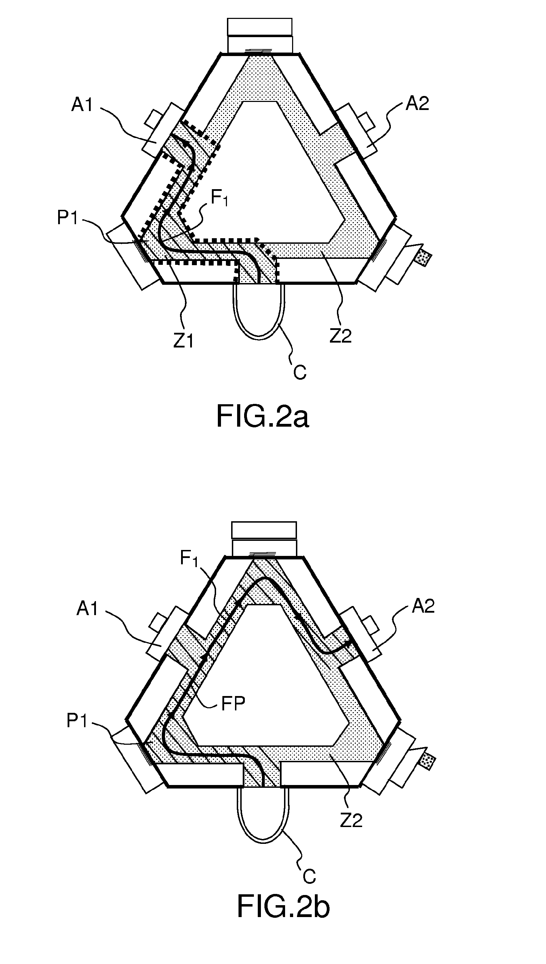

Les gyrolaser connus tels que décrits figure 1 ont notamment pour inconvénient que, si l'amorçage des deux zones Z1 et Z2 n'est pas parfaitement symétrique, des phénomènes de court-circuit ou de mauvais amorçage se produisent, tels qu'illustré sur la figure 2. Dans ce cas, la fonction gyromètre ne peut être maintenue pour les raisons invoquées précédemment et l'électronique coupe, l'alimentation, le gyrolaser est arrêté automatiquement. Généralement, un temps d'attente de plusieurs minutes est alors nécessaire pour évacuer les charges résiduelles à l'intérieur du plasma avant de pouvoir tenter un nouvel amorçage avec de bonnes chances de réussite. Dans des applications aéronautiques, cette situation n'est pas acceptable. Garantir un démarrage correct et fiable du gyrolaser est ainsi absolument nécessaire.

Deux phénomènes sont par exemple la cause d'une dissymétrie de l'amorçage. La figure 2a décrit le cas dans lequel l'amorçage n'a pas fonctionné dans la deuxième zone d'amorçage Z2 (non amorçage). La tension d'amorçage appliquée entre la cathode C et l'anode A2 n'a pas permis de générer une décharge plasma. Une seule décharge correspondant au seul flux F1 de charges, a généré un plasma P1, et donc un seul milieu amplificateur est obtenu entre la cathode C et l'anode A1 après la phase d'amorçage.

La figure 2b illustre le cas dans lequel un pontage est réalisé : la décharge plasma et donc le flux de charges FP n'est pas symétrique, les charges circulant entre la cathode C et l'anode A2 en passant par l'anode A1. L'anode A1 sur la figure 2b, est court-circuitée. Le milieu amplificateur s'étend dans la portion de gaz entre C et A1 (Z1) et entre A1 et A2 en passant par le sommet du triangle opposé à la cathode C.

De plus, un des défis actuel est de réduire la taille des gyrolasers, qui ont aujourd'hui des dimensions d'une à quelques dizaines de cm (typiquement les longueurs de parcours des faisceaux sont compris entre 8 cm et 40 cm), tout en maintenant les performances et la durée de vie. La taille du bloc de Zérodur est donc réduite, mais la taille des électrodes ne peut l'être d'autant (sauf au détriment de la durée de vie). La compacité du gyrolaser augmente donc les risque de pontage et de non amorçage.

Le but de la présente invention est de remédier aux inconvénients précités. En particulier la présente invention a pour but de réaliser un gyrolaser présentant un amorçage correct et fiable.

### DESCRIPTION DE L'INVENTION

Plus précisément, l'invention a pour objet un gyrolaser comprenant :
- au moins une cavité optique en anneau et un milieu gazeux dont au moins une portion constitue un milieu amplificateur, la cavité et le milieu amplificateur étant contenus à l'intérieur d'un bloc et tels que deux modes optiques dits contrarotatifs sont aptes à se propager en sens inverse l'un de l'autre à l'intérieur de la cavité optique,
- au moins trois électrodes en contact avec le gaz du milieu amplificateur, au moins une électrode d'un premier type et au moins une première électrode d'un deuxième type et une deuxième électrode d'un deuxième type, les électrodes étant aptes à générer des charges dans une portion de milieu gazeux située entre l'électrode d'un premier type et la première électrode du deuxième type dénommée première zone de décharge, et dans une portion de gaz située entre l'électrode d'un premier type et la deuxième électrode du deuxième type dénommée deuxième zone de décharge, lorsqu'une tension électrique d'amorçage est appliquée respectivement entre l'électrode d'un premier type et la première électrode d'un deuxième type, et entre l'électrode d'un premier type et la deuxième électrode du deuxième type, la cavité et une répartition des électrodes comprenant au moins un plan de symétrie perpendiculaire au plan de la cavité,
- au moins un élément électriquement conducteur d'amorçage mis à un potentiel prédéterminé, et dont la forme et la disposition sont telles que la symétrie est respectée, l'élément électriquement conducteur étant adapté pour générer localement un champ électrique apte à guider les charges de sorte qu'elles se répartissent symétriquement selon un premier flux et un deuxième flux dans respectivement les première et deuxième zones de décharges lors de l'application de ladite tension d'amorçage, de manière à initialiser simultanément un premier plasma et un deuxième plasma respectivement dans la première zone de décharge et dans la deuxième zone de décharge, l'élément électriquement conducteur étant disposé à proximité d'une zone sans décharge et opérant un guidage par répulsion des charges en dehors d'une zone ne constituant pas une zone de décharge.

Avantageusement le gyrolaser comprend en outre un élément conducteur additionnel comprenant au moins une partie s'étendant le long du parcours des charges dans les zones de décharges plasma et réalisant un guidage par attraction des charges dans les zones, et au moins un élément conducteur disposé à proximité d'une zone sans décharge et réalisant un guidage par répulsion des charges en dehors d'une zone ne constituant pas une zone de décharge.

Avantageusement, l'électrode du premier type est une cathode et les électrodes du deuxième type sont des anodes.

Selon un mode de réalisation, au moins un élément conducteur est relié électriquement à une électrode.
Selon un mode de réalisation au moins un élément conducteur présente une forme de bande.
Selon un autre mode de réalisation au moins un élément conducteur présente une forme de plot.

Selon un mode de réalisation au moins un élément conducteur est disposé sur la surface dudit bloc.
Selon un autre mode de réalisation au moins un élément conducteur est disposé au moins partiellement à l'intérieur d'une cavité dudit bloc.

D'autres caractéristiques, buts et avantages de la présente invention apparaîtront à la lecture de la description détaillée qui va suivre et en regard des dessins annexés données à titre d'exemples non limitatifs et sur lesquels :
- La figure 1 déjà citée illustre la structure d'un gyrolaser selon l'état de la technique.
- La figure 2 déjà citée illustre deux cas de mauvais amorçage du gyrolaser selon l'état de la technique.
- La figure 3 illustre un gyrolaser selon l'invention.
- La figure 4 illustre un mode de réalisation d'un gyrolaser selon l'invention comprenant deux éléments conducteurs additionnels.
- La figure 5 illustre les champs électriques présents à l'amorçage pour un gyrolaser selon l'état de la technique.
- La figure 6 illustre une autre variante de gyrolaser selon l'invention.
- La figure 7 illustre une autre variante de gyrolaser selon l'invention.
- La figure 8 illustre un mode de réalisation de l'élément conducteur selon l'invention.
- La figure 9 illustre un autre mode de réalisation de l'élément conducteur selon l'invention.
- La figure 10 illustre un autre mode de réalisation de l'élément conducteur selon l'invention.

### DESCRIPTION DETAILLEE DE L'INVENTION

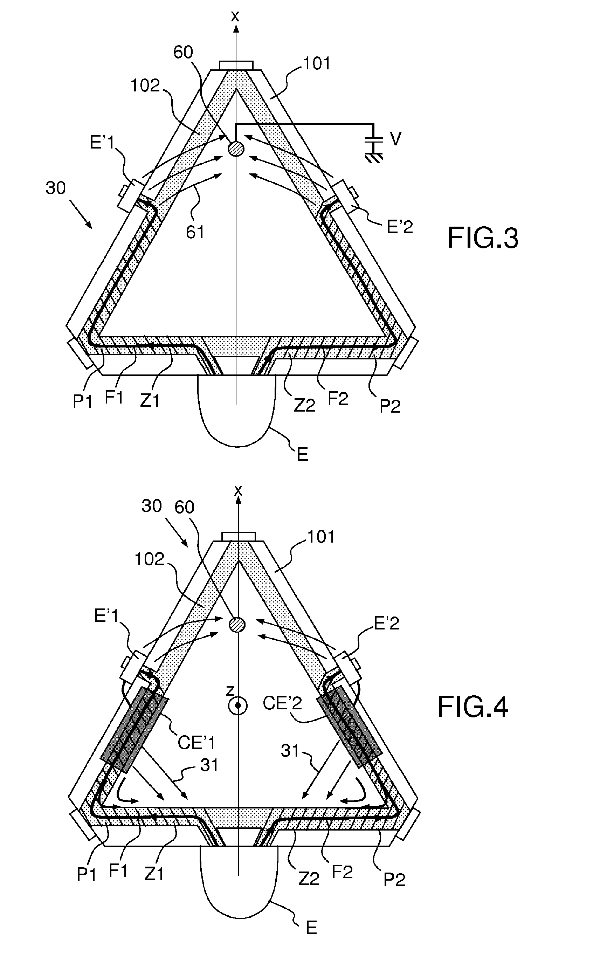

La figure 3 illustre un gyrolaser 30 selon l'invention. Ce gyrolaser présente les caractéristiques et le fonctionnement d'un gyrolaser de l'état de la technique de type monoaxe, telles que décrit figure 1. Il comprend une cavité optique en anneau et un milieu gazeux 102 dont au moins une portion constitue un milieu amplificateur destiné à laser. La cavité optique et le milieu amplificateur, disposé sur le chemin optique du faisceau laser, sont contenus dans un bloc 101. Ce bloc est par exemple en vitro céramique, matériau bien connu pour son faible coefficient de dilatation en fonction de la température. Deux modes optiques dits contrarotatifs sont aptes à se propager en sens inverse l'un de l'autre à l'intérieur de la cavité optique.
Le gyrolaser selon l'invention comprend au moins trois électrodes en contact avec le gaz du milieu amplificateur, au moins une électrode E d'un premier type, et au moins deux électrodes E'1 et E'2 d'un deuxième type, dénommées respectivement première électrode et deuxième électrode. Selon une variante préférée, l'électrode E est une cathode C et les électrodes E'1 et E'2 deux anodes A'1 et A'2. Le potentiel appliqué à la cathode est inférieur au potentiel appliqué aux anodes, et les charges négatives (les électrons) du gaz ionisé circulent de la cathode vers les anodes. Mais l'invention s'applique également à un gyrolaser comprenant deux cathodes et une anode.
A l'amorçage du gyrolaser 30, la tension électrique d'amorçage est appliquée simultanément entre d'une part l'électrode d'un premier type E et la première électrode du deuxième type E'1 et d'autre part entre l'électrode E et la deuxième électrode du deuxième type E'2. Selon le principe de l'amorçage décrit précédemment, les électrodes sous tension génèrent des charges, par exemple des électrons de charge négative, dans d'une part une portion du milieu gazeux située entre E et E'1 dénommée première zone de décharge Z1,et d'autre part entre E et E'2 dénommée deuxième zone de décharge Z2. La cavité et la répartition des électrodes sont telles qu'il existe un plan de symétrie xz perpendiculaire au plan de la cavité et passant par l'électrode du premier type E, pour des raisons explicitées précédemment. Soit x l'axe de ce plan compris dans le plan de la cavité.
Le gyrolaser selon l'invention comprend un élément conducteur 60 disposé en un point précis autour du parcours des décharges plasmas.
L'élément conducteur d'amorçage 60 est mis à un potentiel prédéterminé, et sa forme et sa disposition sont telles que la symétrie par rapport au plan xz est respectée, de même que le champ électrique qu'il génère. Dans la suite l'élément conducteur d'amorçage est simplement dénommé élément conducteur.
Si l'élément est unique, pour des raisons de symétrie il est situé sur l'axe x. Selon une variante, l'élément conducteur a une forme de plot.

Le mode de guidage des charges au moment de l'amorçage est également illustré figure 3. L'au moins un élément conducteur 60 est adapté pour générer localement un champ électrique qui guide les charges au moment de l'amorçage de sorte qu'elles se répartissent symétriquement selon un premier flux F1 et un deuxième flux F2 dans respectivement la première zone de décharge Z1 et le deuxième zone de décharge Z2. La répartition symétrique des charges à l'amorçage permet ainsi de sécuriser l'amorçage en initialisant à chaque fois un premier plasma P1 dans la première zone de décharge Z1 et un deuxième plasma P2 dans la deuxième zone de décharge Z2.
Le contrôle fin du champ électrique, et des lignes de champs correspondantes, au niveau du parcours des charges dans les zones de décharge, c'est-à-dire le long du parcours des décharges plasma, permet de guider les charges au moment critique de l'amorçage. Pendant la phase d'amorçage, les charges vont suivre les lignes de champs et forcer la connexion plasma aux bonnes électrodes.
L'élément conducteur 60 est situé à proximité d'une zone où la présence des charges n'est pas souhaitée, c'est-à-dire d'une portion de gaz qui ne constitue pas une zone de décharge, dénommée zone sans décharge. L'élément conducteur 60 est adapté pour que le champ électrique local 61 généré par l'élément conducteur 60 opère alors par répulsion des charges en dehors d'une zone ne constituant pas une zone de décharge, de manière à les empêcher de pénétrer dans cette zone sans décharge et en les obligeant à se répartir selon les deux flux symétriques F1 et F2. L'élément conducteur génère une barrière de potentiel pour les charges qui auraient tendance à l'amorçage à « faire le tour » du gyrolaser en circulant entre la première et la deuxième électrode du deuxième type sans passer par l'électrode du premier type.
Ce mode de guidage est particulièrement efficace pour éviter le court-circuitage d'une électrode (pontage).
Préférentiellement l'élément conducteur ne doit pas être positionné proche des zones Z1 et Z2 dans lesquelles s'initialisent les plasmas P1 et P2 ;
Pour obtenir cet effet répulsif, le potentiel V de l'élément conducteur est préférentiellement supérieur à Va, potentiel des l'électrodes du deuxième type E'1 et E'2 (préférentiellement des anodes) et préférentiellement sensiblement égal à Vc , potentiel de l'électrode du premier type E (préférentiellement une cathode).
Selon un mode de réalisation illustré figure 3, l'élément conducteur 60 est relié électriquement à un potentiel externe.
Selon un autre mode de réalisation, l'élément conducteur 60 est relié à la cathode C. Le potentiel prédéterminé V est alors égal à Vc.

Un mode de réalisation du gyrolaser selon l'invention comprend en outre au moins un élément conducteur d'amorçage additionnel, deux éléments conducteurs additionnels CE'1 et CE'2 selon la variante de l'invention décrite figure 4.
L'au moins un élément conducteur d'amorçage additionnel est mis à un potentiel prédéterminé, et sa forme et sa disposition sont telles que la symétrie par rapport au plan xz est respectée, de même que le champ électrique qu'il génère.
Dans la suite l'élément conducteur d'amorçage additionnel est simplement dénommé élément conducteur additionnel.
L'au moins un élément conducteur additionnel est adapté pour générer localement un champ électrique 31 qui guide les charges au moment de l'amorçage de sorte qu'elles se répartissent symétriquement selon un premier flux F1 et un deuxième flux F2 dans respectivement la première zone de décharge Z1 et le deuxième zone de décharge Z2. La répartition symétrique des charges à l'amorçage permet ainsi de sécuriser l'amorçage en initialisant à chaque fois un premier plasma P1 dans la première zone de décharge Z1 et un deuxième plasma P2 dans la deuxième zone de décharge Z2.
Le contrôle fin du champ électrique, et des lignes de champs correspondantes, au niveau du parcours des charges dans les zones de décharge, c'est-à-dire le long du parcours des décharges plasma, permet de guider les charges au moment critique de l'amorçage. Pendant la phase d'amorçage, les charges vont suivre les lignes de champs et forcer la connexion plasma aux bonnes électrodes. Les éléments conducteurs additionnels comprennent chacun au moins une partie s'étendant le long du parcours des charges dans les zones de décharge Z1 et Z2, c'est à dire le long du parcours des décharges plasma.

Selon un mode de réalisation illustré figure 4, les deux éléments conducteurs CE'1 et CE'2 additionnels sont disposés à proximité des électrodes du deuxième type E'1 et E'2. Le champ électrique crée localement par les éléments conducteurs, et les lignes de champs correspondantes, guident les électrons, qui « remontent » le champ électrique, c'est-à-dire le suivent en sens inverse, et attirent ceux-ci le long des zones de décharge Z1 et Z2. En effet les électrons remontent le champ électrique jusqu'aux électrodes du deuxième type pour établir la liaison électrique. Le guidage s'opère par attraction des charges dans une région donnée correspondant aux zones Z1 et Z2.
Pour respecter la symétrie du système, CE'1 et CE'2 sont mis à un potentiel prédéterminé identique.
La figure 4 illustre le cas dans lequel deux modes de guidage, répulsion et attraction, sont combinés dans un gyrolaser 30 selon l'invention.
Selon un mode de réalisation illustré figure 4, au moins un élément conducteur, ici de manière non limitative les éléments conducteurs additionnels, ont une forme de bande.
Selon un mode de réalisation tel qu'illustré figure 4, les éléments conducteurs CE'1 et CE'2 sont reliés aux électrodes du deuxième type E'1 et E'2, qui sont par exemple des anodes au potentiel Va. Ce type de connexion a pour avantage d'être simple à réaliser en pratique.
Le potentiel prédéterminé V des éléments conducteurs est alors égal à Va. Typiquement, un potentiel Va de -100 V à -300 V est appliqué aux anodes.
Selon un autre mode de réalisation les éléments conducteurs sont reliés à un potentiel prédéterminé V externe, généré par une source autonome, issue par exemple de l'électronique du gyrolaser. Préférentiellement le potentiel V est supérieur ou égal à Va. Ce type de connexion à une source externe permet d'avoir plus de marge de manoeuvre pour contrôler le champ électrique.

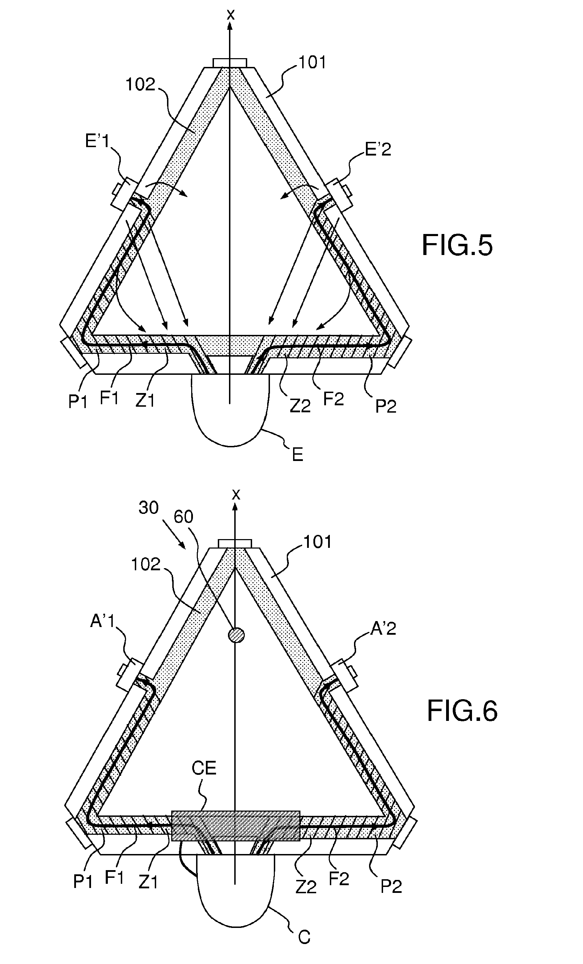

La figure 5 illustre pour comparaison la répartition du champ électrique selon l'état de la technique sans les éléments conducteurs à un potentiel prédéterminé selon l'invention.

La figure 6 illustre un mode de réalisation de l'invention comprenant un élément conducteur additionnel CE dont une partie s'étend le long du parcours des décharges plasma et qui est situé à proximité de l'électrode du premier type E, par exemple une cathode C. L'élément additionnel CE a par exemple une forme de bande disposée le long du parcours des charges au voisinage de la cathode et respectant la symétrie Les lignes de champs générées par CE guident les charges au voisinage de la cathode C de manière à ce qu'elles se répartissent symétriquement selon deux flux F1 et F2.
Typiquement, un potentiel Vc de -500 V à -600 V est appliqué à la cathode. Sur la figure 6 l'élément conducteur additionnel CE est relié à la cathode au potentiel Vc Le potentiel prédéterminé V de l'élément conducteur est alors égal à Vc.
Selon un autre mode de réalisation l'élément conducteur est relié à un potentiel prédéterminé V externe, issu par exemple de l'électronique du gyrolaser.
Préférentiellement le potentiel est inférieur à Vc et supérieur à Va pour ne jamis s'opposer au sens de l'écoulement des charges.

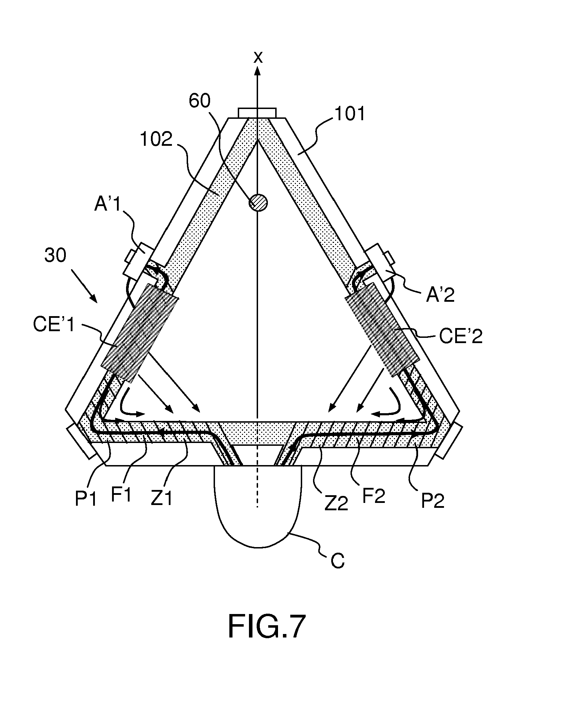

Le gyrolaser illustré figure 7 comprend :
- au moins un élément conducteur 60 disposé à proximité d'une zone sans décharge et réalisant un guidage par répulsion des charges en dehors d'une zone ne constituant pas une zone de décharge.
- deux éléments conducteurs additionnels CE'1 et CE'2, comprenant au moins une partie s'étendant le long du parcours des charges dans les zones de décharges plasma Z1 et Z2 , réalisant un guidage par attraction des charges dans ces zones et connectés aux électrodes du deuxième type qui sont les anodes A'1 et A'2.

L'élément conducteur peut avoir tout type de forme, et peut également être constitué de plusieurs parties, par exemple une bande conductrice et un plot à son extrémité.

Selon un mode de réalisation, l'élément conducteur est disposé sur la surface du bloc 101. Par exemple lorsque l'élément a une forme de bande, ce peut être une bande de scotch conducteur collée sur la surface. Les bandes métalliques peuvent également être déposées par dépôt de laque ou par une technique de dépôt sous vide. Un avantage du dépôt sous vide consiste en ce que les couches métalliques sont uniformes, et ainsi la symétrie des champs électriques est mieux garantie.

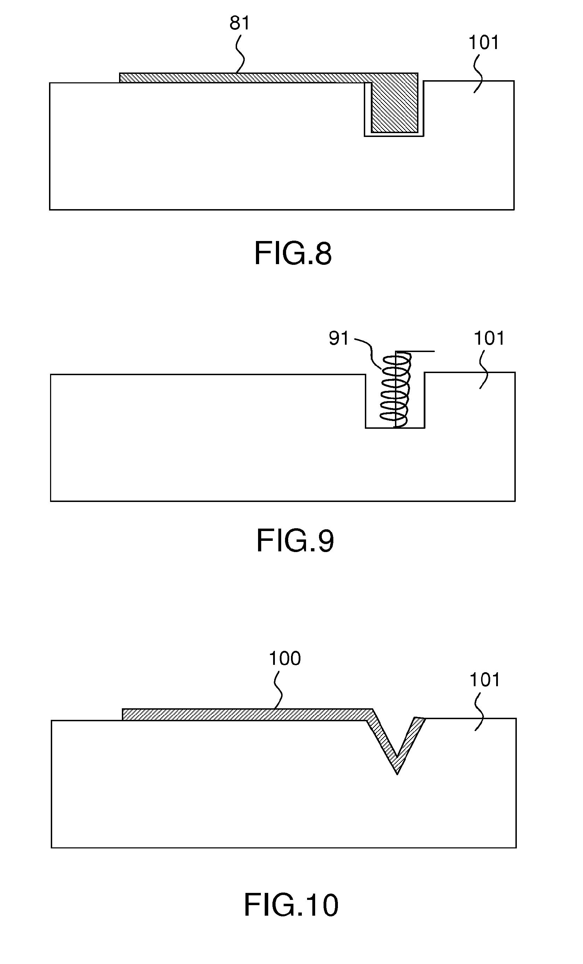

Selon un autre mode de réalisation illustré figures 8 et 9, l'élément conducteur 81 est disposé au moins partiellement à l'intérieur d'une cavité du bloc 101.
Cette cavité peut par exemple être réalisée par perçage.
Selon divers exemples non limitatifs, l'élément 81 de la figure 8 a une forme de plot, l'élément 91 de la figure 9 a une forme de ressort.

Selon un autre mode de réalisation l'élément conducteur 100 peut être une couche métallique déposée sur la surface du bloc et à l'intérieur d'une cavité en forme de pointe, telle qu'illustré figure 10. Un avantage de cette géométrie est que l'élément conducteur a un double rôle : générer un potentiel pour guider les charges circulant dans le milieu amplificateur et réaliser par effet de pointe un piégeage des ions présents dans bloc 101

Le gyrolaser selon l'invention peut être un gyrolaser monoaxe, tel qu'illustré sur les figures précédentes. Dans ce cas le gyrolaser présente une cavité optique et une électrode d'un premier type, et le plan de symétrie passe par l'électrode du premier type.
Le gyrolaser selon l'invention peut également être tri-axe. Dans ce cas le gyrolaser présente trois cavités optiques, chacune comprenant un plan de symétrie. Le gyrolaser triaxe dans son ensemble comprend un axe de symétrie correspondant à l'intersection des trois plans de symétrie des trois cavités.

## Revendications

1. Gyrolaser (30) comprenant :
- au moins une cavité optique en anneau et un milieu gazeux (102) dont au moins une portion constitue un milieu amplificateur, la cavité et le milieu amplificateur étant contenus à l'intérieur d'un bloc (101), et tels que deux modes optiques dits contrarotatifs sont aptes à se propager en sens inverse l'un de l'autre à l'intérieur de la cavité optique,
- au moins trois électrodes en contact avec le gaz du milieu amplificateur, au moins une électrode d'un premier type (E) et au moins une première électrode d'un deuxième type (E'1) et une deuxième électrode d'un deuxième type (E'2),
- lesdites électrodes étant aptes à générer des charges dans une portion de milieu gazeux située entre ladite électrode d'un premier type (E) et ladite première électrode du deuxième type (E'1) dénommée première zone de décharge (Z1), et dans une portion de gaz située entre ladite électrode d'un premier type (E) et ladite deuxième électrode du deuxième type (E'2) dénommée deuxième zone de décharge (Z2), lorsqu'une tension électrique d'amorçage est appliquée respectivement entre ladite électrode d'un premier type (E) et ladite première électrode d'un deuxième type, et entre ladite électrode d'un premier type (E) et ladite deuxième électrode du deuxième type (E'2),
- ladite cavité et une répartition desdites électrodes comprenant au moins un plan de symétrie (xz) perpendiculaire au plan de la cavité,
- au moins un élément électriquement conducteur d'amorçage (60) mis à un potentiel prédéterminé, dont la forme et la disposition sont telles que ladite symétrie est respectée,
- ledit élément électriquement conducteur (60) étant adapté pour générer localement un champ électrique apte à guider lesdites charges de sorte qu'elles se répartissent symétriquement selon un premier flux (F1) et un deuxième flux (F2) dans respectivement lesdites première (Z1) et deuxième (Z2) zones de décharges lors de l'application de ladite tension d'amorçage, de manière à initialiser simultanément un premier plasma (P1) et un deuxième plasma (P2) respectivement dans ladite première zone de décharge (Z1) et dans ladite deuxième zone de décharge (Z2), ledit élément électriquement conducteur étant disposé à proximité d'une zone sans décharge et opérant un guidage par répulsion desdites charges en dehors d'une zone ne constituant pas une zone de décharge.

2. Gyrolaser selon la revendication 1 comprenant en outre au moins un élément conducteur additionnel (CE'1, CE'2, CE) comprenant au moins une partie s'étendant le long du parcours desdites charges dans lesdites zones de décharges plasma et réalisant un guidage par attraction desdites charges dans lesdites zones.

3. Gyrolaser selon l'une des revendications précédentes dans lequel ladite électrode du premier type est une cathode (C) et lesdites électrodes du deuxième type sont des anodes (A'1, A'2).

4. Gyrolaser selon l'une des revendications précédentes dans lequel au moins un élément conducteur est relié électriquement à une électrode.

5. Gyrolaser selon l'une des revendications précédentes dans lequel au moins un élément conducteur présente une forme de bande.

6. Gyrolaser selon l'une des revendications 1 à 4 dans lequel au moins un élément conducteur présente une forme de plot.

7. Gyrolaser selon l'une des revendications précédentes dans lequel au moins un élément conducteur est disposé sur la surface dudit bloc.

8. Gyrolaser selon l'une des revendications 1 à 6 dans lequel au moins un élément conducteur est disposé au moins partiellement à l'intérieur d'une cavité dudit bloc.
